# EUROPEAN PATENT APPLICATION

(11) **EP 2 369 364 A1**
(43) Date of publication of application: **28.09.2011**
(21) Application number: 10275028.8
(22) Date of filing: 22.03.2010
(51) Int. Cl.: G01S 13/86, F41G 3/00

(54) **Improvements in or relating to sighting mechanisms**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

Described herein is a sighting mechanism that includes a system (10) for modifying an optical sight which does not suffer from disadvantages associated with poor visibility. The system (10) includes a source of continuous wave (CW) radiation (16) that provides CW radiation to an antenna (22) for illuminating a field of view. The antenna (22) also collects reflections from objects within the field of view for processing. If only moving objects within the field of view are of interest, reflections from stationary objects that are at the same frequency as the illuminating radiation can be discarded. For moving objects, the reflections are modulated in accordance with the movement of the object and have a frequency that is proportional to their radial velocity. The modulated reflections can be interpreted rather well by the human brain and can be relayed directly to the user through ear phones or other similar devices.

## Description

The present invention relates to improvements in or relating to sighting mechanisms.

It is well known to use optical sights for various purposes. However, in poor conditions where visibility is substantially reduced, such sights become ineffective.

Night sights can be used to improve visibility at night but these sights may not be effective in obscured conditions.

It is therefore an object of the present invention to provide an improved sighting mechanism which does not suffer the disadvantages associated with poor visibility.

In accordance with one aspect of the present invention, there is provided a sighting mechanism comprising:-
an optical sight having an optical axis; and
at least one radio frequency (RF) sensor that provides an output indicative of objects within a field of view, each RF sensor having at least the same field of view as the optical sight.

For a better understanding of the present invention, reference will now be made, by way of example only, to the accompanying drawings in which:-
Figure 1 illustrates a single channel RF system in accordance with one embodiment of the present invention;
Figure 2 illustrates a dual channel RF system in accordance with another embodiment of the present invention;
Figure 3 illustrates the beam arrangement in the dual channel system of Figure 2;
Figure 4 illustrates a schematic view of a sighting mechanism that includes the single channel RF system of Figure 1; and
Figure 5 illustrates a schematic view of a sighting mechanism that includes the dual channel RF system of Figure 2.

The present invention provides a sighting mechanism in which a user of an optical sight is provided with audio cues in addition to the visual ones that are conventionally provided by the optical sight alone. This has the advantage that a user of the sighting mechanism can have improved 'visibility' in poor conditions, for example, at night or in obscured conditions where the visual presentation is inevitably degraded.

The sighting mechanism of the present invention combines a radio frequency (RF) sensor with an optical sight. The RF sensor is arranged as part of a continuous wave (CW) radar system which illuminates a field of view and collects reflections from objects within the field of view. If only moving objects within the field of view are of interest, reflections from stationary objects that are at the same frequency as the illuminating radiation can be discarded. For moving objects, the reflections are modulated in accordance with the movement of the object and have a frequency that is proportional to their radial velocity (Doppler effect). The modulated reflections can be interpreted rather well by the human brain and can be relayed directly to the user through ear phones or other similar devices.

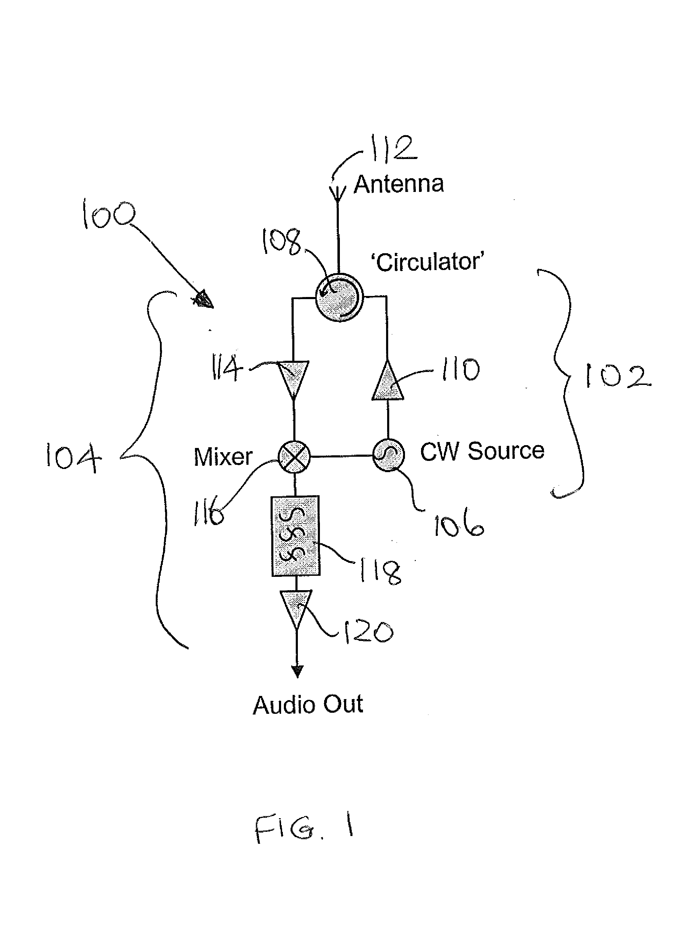

Figure 1 illustrates a single channel RF system 100 that can be attached to an optical sight (not shown) to form a sighting mechanism in accordance with the present invention. The system 100 comprises a transmit portion 102 and a receive portion 104. The transmit portion 102 includes a CW source 106 that is connected to a circulator 108 via an amplifier 110. The circulator 108 is connected to an antenna 112. The receive portion 104 shares the antenna 112 and the circulator 108 with the transmit portion 102 as will be described in detail below. The receive portion 104 also includes an amplifier 114 connected to the circulator 108, a mixer 116 connected to the amplifier 114 and to the CW source 106, a filter 118 connected to the mixer 116, and an amplifier 120 connected to the filter 118.

The antenna 112 is co-located with the optical sight so that the same field of view is illuminated by the CW radiation as is viewed through the optical sight. However, the antenna 112 may be positioned at a location away from the optical sight but arranged to have substantially the same field of view as the optical sight. Naturally, suitable connections are provided to link the antenna 112 to the rest of the system 100, the other components of which can be located near to the optical sight or remotely in accordance with the particular application.

During transmission, the CW source 106 generates CW radiation and passes it to the amplifier 110 for amplification if required. The CW radiation is then passed to the circulator 108 for passing to the antenna 112 for illuminating the field of view.

Reflected radiation from objects (not shown) within the field of view is received by the antenna 112 and passed to the circulator 108 where it is directed into the receive portion 104 for processing. The reflected radiation is amplified by amplifier 114 before being mixed with the transmitted radiation from the CW source 106 in the mixer 116. This mixing provides a return signal that comprises DC signals corresponding to stationary objects and modulated signals corresponding to moving objects.

If stationary objects are not of interest, the DC signals are removed from the return signal by the filter 118 and only the modulated signals are amplified by amplifier 120 and passed as an audio output to the user of the system 100. The audio output provides an indication of the presence of moving objects within the field of view but does not give their directionality with respect to the user. Ideally, the audio output is passed to ear phones worn by a user or to other means for providing the user with an audio signal.

The modulated signals correspond to the Doppler frequency shift between the transmitted radiation and the reflected radiation. The frequency of the transmitted radiation may be chosen so that the modulated signals fall within a suitable audio frequency band that can be interpreted by a user.

It is important to maintain isolation between the transmitted radiation and the reflected radiation and this can be achieved by the circulator 108 if it is correctly set up. In this case, the circulator 108 is used to route alternately the transmitted radiation between the transmit portion 102 and the antenna 112 and the reflected radiation between the antenna 112 and the receive portion 104.

However, it is also possible to achieve isolation of between the transmitted radiation and the reflected radiation by using different or opposite polarisations. For example, the transmitted radiation could be orthogonally polarised with respect to the reflected radiation.

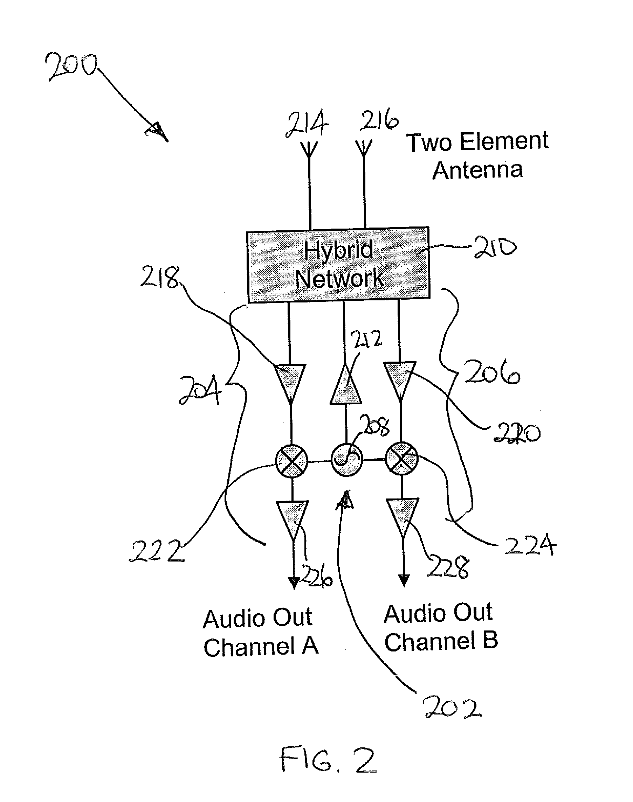

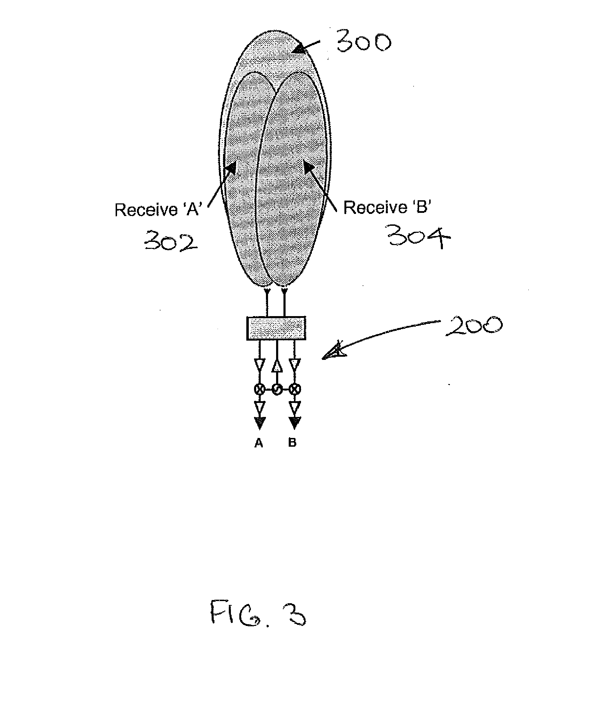

Figure 2 illustrates a dual channel RF system 200 that offers a 'stereo' response to the user. Here, two antennas are used to transmit CW radiation to and to receive reflected radiation from the field of view. The CW radiation is transmitted as two contiguous transmit beams of CW radiation in azimuth that are projected into the field of view. The two contiguous transmit beams together form a transmit 'floodlight' beam which overlaps the two reflected beams that form the reflected radiation from the field of view as is shown in Figure 3.

Referring to Figure 2 in more detail, the system 200 has a transmit portion 202 and two receive portions 204, 206. The transmit portion 202 includes a CW radiation source 208 that is connected to a hybrid network 210 via an amplifier 212. The hybrid network 210 is connected to first and second antennas 214, 216. The hybrid network 210 and the antennas 214, 216 also form part of the two receive portions 204, 206 as will be described in more detail below. The two receive portions 204, 206 each also include respective amplifiers 218, 220 connected to the hybrid network 210, respective mixers 222, 224 connected to the amplifiers 218, 220 and to the CW source 208 as shown, and respective amplifiers 226, 228 connected to respective ones of the mixers 222, 224.

In this embodiment of the invention, the two antennas 214, 216 are again ideally co-located with the optical sight so that substantially the same field of view is illuminated by the CW radiation as is viewed through the optical sight. However, in this case, directionality of the reflected radiation can be determined if the two antennas 214, 216 are suitably located, for example the two antennas 214, 216 are placed on either side of the optical sight. As described with reference to Figure 1, the other components of the system 200 can be located near to the optical sight or remotely in accordance with the particular application.

It will readily be appreciated that the antennas 214, 216 may be arranged in a single unit and still provide the directionality of the reflected radiation. Such a unit may be located with or near the optical sight and be arranged to have at least the same field of view as the optical sight.

During transmission, the CW source 208 generates CW radiation and passes it to the amplifier 212 for amplification if required. The CW radiation is then passed to the hybrid network 210 for passing to the antennas 214, 216 for transmitting to illuminate of the field of view.

Reflected radiation from objects (not shown) within the field of view is received by the antennas 214, 216 and passed to the hybrid network 210 for processing and for direction into the two receive portions 204, 206. The reflected radiation is amplified by amplifiers 218, 220 before being mixed with the transmitted radiation from the CW source 208 in the mixers 222, 224.

Modulated signals produced by the mixers 222, 224 are amplified by respective amplifiers 226, 228 and passed as two audio output channels to the user (not shown) of the system 200. The two audio output channels provide a 'stereo' response to the user as each channel feeds only one channel of the ear phones, the user determining the directionality of the moving objects within the field of view from the two audio signals.

Alternatively, the two modulated signals produced in the two receive portions 204, 206 may be combined in a suitable manner to provide an indication of the directionality of moving objects within the field of view prior being passed as audio signals to the user's ear phones. In this case, the user receives audio signals giving that indication and not audio signals corresponding to the modulated signals themselves.

As shown in Figure 3, the system 200 generates a transmit 'floodlight' beam 300. The transmit 'floodlight' beam 300 overlaps the two reflected beams 302, 304 that form the reflected radiation from the field of view.

The two reflected beams 302, 304 are offset in azimuth so that each audio output channel emphasises moving objects on an associated side of the optical sight. For example, if a moving object is in reflected beam 302, unequal inputs are provided to the two receive portions 204, 206, the input to receive portion 204 being greater than that to receive portion 206 so that directionality of the moving object can be determined by the user. Similarly, if the moving object is in reflected beam 304, the input to receive portion 206 is greater than that to receive portion 204.

Reflected radiation directly in line with the optical sight would be processed by the hybrid network 210 to provide equal inputs to the two receive portions 204, 206 so that the audio output channels provide outputs of equal amplitude.

Due to the more complex nature of the arrangement in Figure 2, it is more important to maintain isolation between the transmitted radiation and the reflected radiation. Here, the hybrid network 210 ensures that different polarisations are used for the transmitted radiation and the reflected radiation, for example, orthogonal polarisations may be used between the transmitted radiation and the reflected radiation.

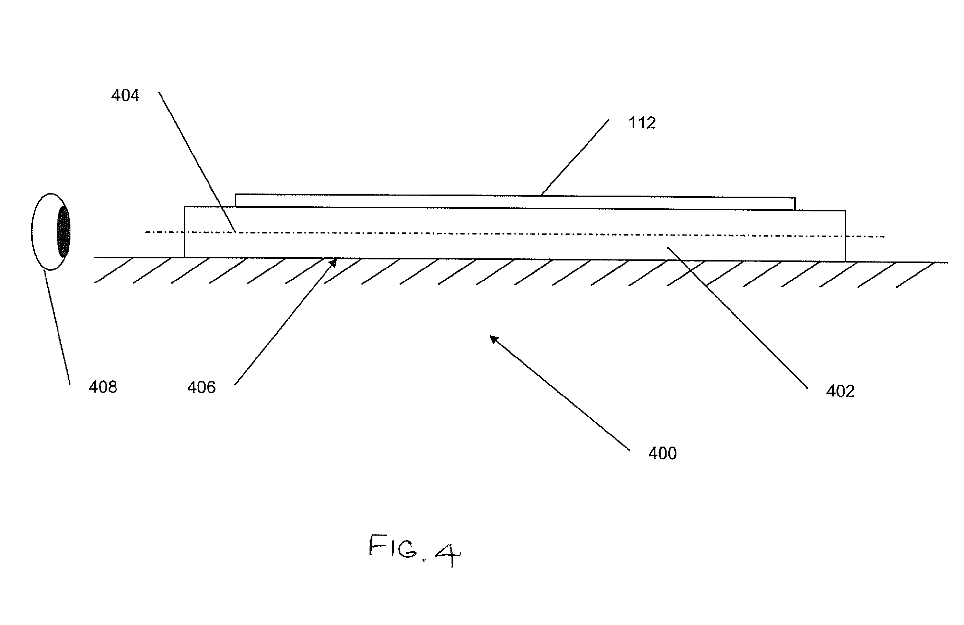

In Figure 4, a schematic side view of a sighting mechanism 400 is shown that illustrates the positioning of the antenna 112 of the system 100 with respect to an optical sight 402. The optical sight 402 has an optical axis 404 and can be mounted on a suitable surface 406. A user 408 looks through the optical sight 402 to observe the field of view. Here, the antenna 112 is positioned above the optical sight 402 and is arranged to be aligned with the optical axis 404 so that it has substantially the same field of view as the optical sight 402. Naturally, the antenna 112 could also be positioned to the left, to the right or below of the optical sight 402 and still be aligned with the optical axis 404.

As an alternative, the optical sight 402 may be hand-held or supported by other means (not shown). In this case, the antenna 112 can be positioned above, below, to the left or to the right of the optical sight 402 and still be aligned to have substantially the same field of view as the optical sight 402.

It will be appreciated that, depending on the particular application of the optical sight 402, the antenna 112 may have a larger field of view than the optical sight 402 that includes the field of view of the optical sight 402.

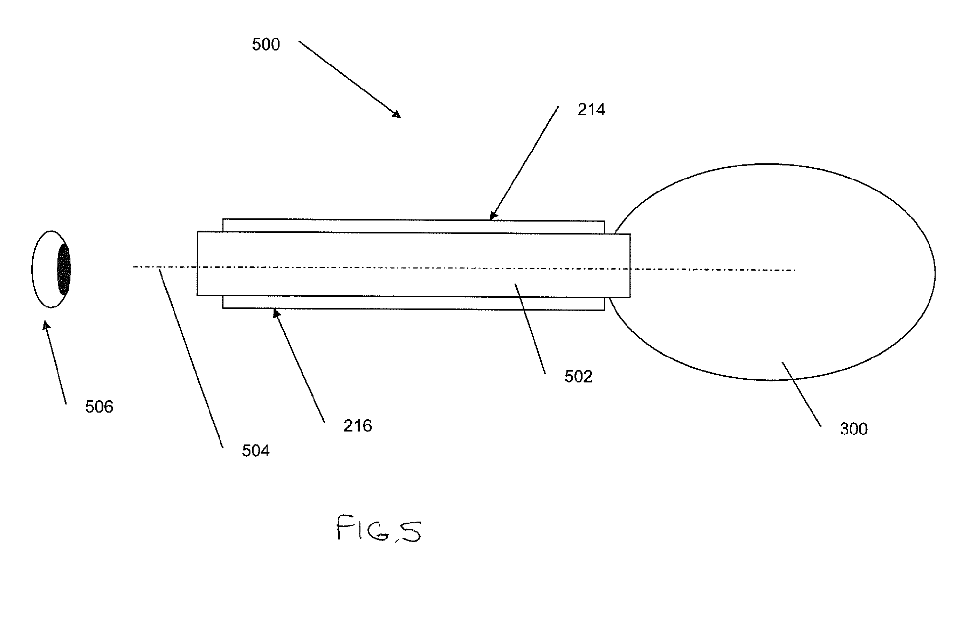

Figure 5 illustrates a schematic plan view of a sighting mechanism 500 of the antennas 214, 216 of the system 200 with respect to an optical sight 502. The optical sight 502 has an optical axis 504 and can be mounted on a suitable surface (not shown). A user 506 looks through the optical sight 502 to observe the field of view. Here, the antennas 214, 216 are positioned to the left and to the right respectively of the optical sight 502 and are arranged to be aligned with the optical axis 504.

In alternative embodiments of the sighting mechanism 500, both antennas 214, 216 can be positioned above, below, to the left or to the right of the optical sight 502 provided that they still produce two contiguous beams in azimuth that form the transmit 'floodlight' beam 300 as discussed above. The antennas 214, 216 may also be arranged in a single unit as discussed above.

As previously discussed with reference to Figure 3 above, the two antennas 214, 216 provide the transmit 'floodlight' beam 300 into the field of view. This transmit 'floodlight' beam 300 will have at least substantially the same field of view as that of the optical sight 502.

Although the present invention has been described with reference to antennas that both transmit radiation to and receive reflected radiation from a field of view, it will be appreciated that separate antennas can be used for transmitting radiation and for receiving the reflected radiation.

Moreover, the present invention as described with reference to Figures 1 and 2 is not limited to the use of one and two RF sensors respectively. Particular applications may require the utilisation of more than two sensors to provide the required coverage of at least the same field of view as the optical sight. If more than two sensors are used, processing of the reflected radiation may be different to that described with reference to Figures 1 and 2 above.

Coverage achieved by the transmitted radiation is determined by the aperture of the antennas in terms of the wavelength of the radiation used. For an implementation that is compatible with an optical sight, the transmitted radiation would be in the microwave or millimetre-wave bands. At 10GHz, a 6cm antenna aperture provides a field of view in the order of 50°. To obtain the same field of view at 30GHz, an antenna aperture of 2cm is required. Radiation at higher frequencies can be implemented in accordance with atmospheric absorption criteria.

The range capability of the systems described with reference to Figures 1 and 2 will be determined by parameters defined by the radar range equation as is well known in the art, and will be dependent on the power that can be transmitted by the particular arrangement.

It will readily be appreciated that the higher the frequency of operation, the higher the Doppler frequency offset. The frequency of operation therefore needs to be selected to take into account the range of velocities of moving objects in the field of view that need to be detected, for example, the lower the velocity of an object moving in the field of view, the higher the frequency of operation of the system.

Suitable processing of the Doppler frequency offset, that is, the modulated signals created by combining the transmitted radiation with the reflected radiation, can be used to extend the range of frequencies used whilst still producing audio output signals that can be interpreted by a user.

It may be desired that the audio output signals be presented to the user in different ways other than as audio signals. This would be in accordance with each particular application of the system of the present invention.

The system of the present invention can be powered from a range of power supplies, but for portability, a 12V battery supply will be adequate.

Although the present invention has been described with reference to an optical sight, it will be appreciated that the term "optical sight" includes any optical equipment used for locating objects within a field of view.

## Claims

1. A sighting mechanism comprising:-
an optical sight having an optical axis; and
at least one radio frequency (RF) sensor that provides an output indicative of objects within a field of view, each RF sensor having at least the same field of view as the optical sight.

2. A sighting mechanism according to claim 1, wherein each RF sensor forms part of a continuous wave (CW) radar system.

3. A sighting mechanism according to claim 2, wherein a single RF sensor is provided that receives reflected radiation from the field of view.

4. A sighting mechanism according to claim 3, wherein the single RF sensor comprises an antenna that both receives reflected radiation from the field of view and transmits radiation to the field of view.

5. A sighting mechanism according to any one of claims 2 to 4, wherein the CW radar system includes a processor that processes the received reflected radiation to provide the output.

6. A sighting mechanism according to claim 1 or 2, wherein two RF sensors are provided, each receiving reflected radiation from the field of view.

7. A sighting mechanism according to claim 6, wherein each RF sensor comprises an antenna that both receives reflected radiation from the field of view and transmits radiation to the field of view.

8. A sighting mechanism according to claim 7, wherein the two antennas produce contiguous radiation beams in azimuth.

9. A sighting mechanism according to any one of claims 6 to 8, wherein the CW radar system includes a processor that processes the received reflected radiation to provide two outputs, each output corresponding to received reflected radiation from one of the RF sensors.

10. A sighting mechanism according to any one of the preceding claims,
wherein each output comprises an audio signal.
